# EUROPÄISCHE PATENTSCHRIFT

(11) **EP 1 544 984 B1**
(45) Veröffentlichungstag und Bekanntmachung des Hinweises auf die Patenterteilung: **14.02.2007**
(21) Anmeldenummer: 03028980.5
(22) Anmeldetag: 17.12.2003
(51) Int. Cl.: H02K 15/00, H02K 15/04, H02K 3/12, H02K 3/50, B23K 3/03

(54) **Herstellung einer Wicklung aus Formteilen für eine elektrische Maschine**
Manufacturing of a winding of an electric machine using conductor elements
Enroulement pour machines électriques et procédé pour son fabrication de pieces moulées

(43) Veröffentlichungstag der Anmeldung: 22.06.2005
(73) Patentinhaber: TEMIC Automotive Electric Motors GmbH, 10553 Berlin (DE)
(72) Erfinder: Fürguth, Werner, 87640 Altdorf (DE)
(74) Vertreter: Pröll, Jürgen

(56) Entgegenhaltungen:
- FR-A- 2 808 938
- US-A- 2 734 979
- US-A- 3 740 521

## Beschreibung

### GEBIET DER ERFINDUNG

Die vorliegende Erfindung bezieht sich allgemein auf die Formteilwicklungsherstellung, und beispielsweise auf ein Verfahren zur Herstellung einer Wicklung einer elektrischen Maschine durch Verlöten von Formteilen.

### HINTERGRUND DER ERFINDUNG

Bei elektrischen Maschinen ist der Ständer und/oder Läufer im allgemeinen mit einer Wicklung ausgestattet. Bei einer Mehrphasen-Maschine (Asynchron- oder Synchronmaschine) erzeugt der durch die Ständerwicklung fließende Strom ein magnetisches Drehfeld, welches Drehmoment auf den Läufer ausübt. Herkömmlicherweise ist die Wicklung aus gewickelten Drahtspulen aufgebaut. Diese verlaufen im Bereich der sogenannten Spulenseiten in Nuten des Ständerkörpers. Wegen des in der Regel kreisrunden Querschnitts der Drähte beträgt der Füllfaktor in den im allgemeinen rechteckförmigen Nuten meist weniger als 50%.

Zur Erhöhung des Füllfaktors ist es bekannt, die Wicklung nicht aus Drahtgebilden, sondern aus Formteilen mit Nutstäben mit an den Nutquerschnitt angepaßtem Querschnitt auszubilden. Aus der WO 01/95461 A1 ist es beispielsweise bekannt, eine solche Wicklung aus L-förmigen Formteilen zusammenzusetzen. Da die zu verschiedenen Strängen der Maschine (das heißt den verschiedenen Phasen) gehörenden Spulen überlappend angeordnet sind, erfolgt der Aufbau der Formteilwicklung so, daß die Formteile lagenweise (und nicht etwa spulenweise) in die Ständernuten eingesetzt und elektrisch miteinander verbunden werden. Hinsichtlich der Verbindung der einzelnen Formteile ist angegeben, daß diese durch Löten, Schweißen, Toxen oder Stanzpaketieren realisiert werden kann. Näher beschrieben ist die Laserverschweißung; hierfür wird jeweils die Hälfte der Formteile einer Wicklungslage eingesetzt, und anschließend werden die einzelnen Formteile mit den bereits eingesetzten Formteilen der darunterliegenden oder gleichen Lage an vorgesehenen Verbindungsstellen laserverschweißt.

Aus der WO 01/95462 A1 ist ein Verfahren zur Herstellung einer ähnlichen Formteilwicklung bekannt, bei welchem zunächst sämtliche Formteile der Wicklung gefügt werden, und erst dann alle zu schaffenden elektrischen Verbindungen einer oder beider Wicklungsseiten in einem Arbeitsgang durch Schwalllöten oder Tauchlöten hergestellt werden.

Aus der DE 28 36 731 A1 ist ein Verfahren zum Auflöten von Bauteilen auf großflächige Bleche durch Widerstandsverlöten bekannt. Hierbei wird das aufzulötende Bauteil von einer Seite auf das Blech gedrückt (es ist anzunehmen, daß das Blech dabei zur Aufnahme der Reaktionskraft auf einer Unterlage liegt). Von der anderen Seite werden mehrere unabhängig gefederte Elektroden in Kontakt mit dem Blech gebracht. Ein durch die Elektroden und das Blech fließender Strom erwärmt das Blech, so daß das auf der anderen Blechseite angeordnete Bauteil aufgelötet wird.

Aus der DD 256 470 A1 ist ein Widerstandslötverfahren bekannt, bei dem ein zu verbindendes Lötteilpaktet auf dessen gegenüberliegenden Seiten von je einer Lötelektrode kontaktiert wird. Der Lötstrom fließt somit über den Spalt zwischen den zu verlötenden Teilen.

JP 09-097632 offenbart ein Verfahren zum Verschweißen (nicht Verlöten) eines elektrischen Drahtes mit einem L-förmigen Anschlußlappen, welchen den Draht umfaßt. Die Verschweißung erfolgt beispielsweise durch Aufsetzen einer Schweißelektrode auf die Oberseite des Anschlußlappens und, benachbart zum Anschlußlappen, einer weiteren Schweißelektrode auf den Draht.

Die FR 2 808 938 A offenbart ein Verfahren zur Herstellung einer Formteilwicklung, bei der Formteile durch Verlötung zu einer Wicklung zusammengesetzt werden. Die offenen Enden der Formteile werden durch Aufsetzen zweier Elektroden, einer auf das eine Formteil, die andere auf ein anderes Formteil verlötet. Die beiden Elektroden drücken aus entgegengesetzten Richtungen auf zu verlötenden Formteile. Der Heizstrom fließt über die zu verlötende Grenzfläche zwischen den Formteilen.

### ZUSAMMENFASSUNG DER ERFINDUNG

Die Erfindung betrifft ein Verfahren zur Herstellung einer Wicklung einer elektrischen Maschine aus Wicklungsformteilen, die Verbindungsflächen zum Verlöten aufweisen. Das Verfahren umfaßt: Auflegen eines oder mehrerer Formteile auf eine bereits aufgebaute Lage von bereits miteinander verlöteten Formteilen, derart, daß an einer zu verlötenden Verbindungsstelle eine Verbindungsfläche eines Formteils der bereits aufgebauten Lage und eine Verbindungsfläche des bzw. einer der neu aufgelegten Formteile mit dazwischen befindlichem Lot aufeinander zu liegen kommen, wobei die Oberseite des oberen der zu verbindenden Formteilen im Bereich der Verbindungsstelle freiliegt; Aufdrücken wenigstens zweier Widerstandslötelektroden auf die freiliegende Oberseite des oberen von zu verbindenden Formteilen im Bereich einer zu verlötenden Verbindungsstelle, wodurch das untere der zu verbindenden Formteile gegen die bereits aufgebaute Lage gedrückt wird, und somit die zu verbindenden Formteile an der Verbindungsstelle durch die Widerstandslötelektroden zusammengedrückt werden; Spannungsbeaufschlagen der Widerstandslötelektroden, so daß ein Lötstrom in dem oberen Formteil fließt und die damit einhergehende Widerstandserwärmung eine Verlötung der Formteile an der Verbindungsstelle bewirkt.

Ein weiterer Aspekt betrifft ein Verfahren zur Herstellung einer elektrischen Maschine mit einem Ständer und einem Läufer, bei welchem man den Ständer gemäß dem obigen Verfahren mit einer Formteilwicklung ausrüstet, und den mit der Wicklung ausgerüsteten Ständer mit dem Läufer zur elektrischen Maschine zusammensetzt.

Weitere Merkmale sind in den offenbarten Vorrichtungen und Verfahren enthalten oder gehen für den fachmännischen Leser aus der folgenden detaillierten Beschreibung von Ausführungsformen und den angefügten Zeichnungen hervor.

### BESCHREIBUNG DER ZEICHNUNG

Ausführungsformen der Erfindung werden nun beispielhaft und unter Bezugnahme auf die angefügte Zeichnung beschrieben, in der:
Fig. 1 einen Lötvorgang durch eine Querschnittansicht von Wicklungslagen und auf ein Formteil der obersten Wicklungslage aufgesetzten Lötelektroden veranschaulicht;
Fig. 2 ein Ablaufdiagramm des Lötverfahrens ist;
Fig. 3 ein beispielhaftes Wicklungsschema einer mehrsträngigen Wicklung mit überlappenden Spulen zeigt;
Fig. 4 zwei verschiedene beispielhafte Formteiltypen in perspektivischer Ansicht und Querschnittansicht darstellen;
Fig. 5 eine perspektivische Ansicht einer im Aufbau befindlichen Wicklungslage;
Fig. 6 eine perspektivische Ansicht eines Ständerausschnitts einer elektrischen Maschine mit im Aufbau befindlicher Formteilwicklung zeigt;
Fig. 7 eine perspektivische Teilansicht eines fertig mit der Wicklung bestückten Ständers zeigt;
Fig. 8 schematisch einen Starter-Generator mit einer solchen Wicklung veranschaulicht.

### BESCHREIBUNG DER BEVORZUGTEN AUSFÜHRUNGSFORMEN

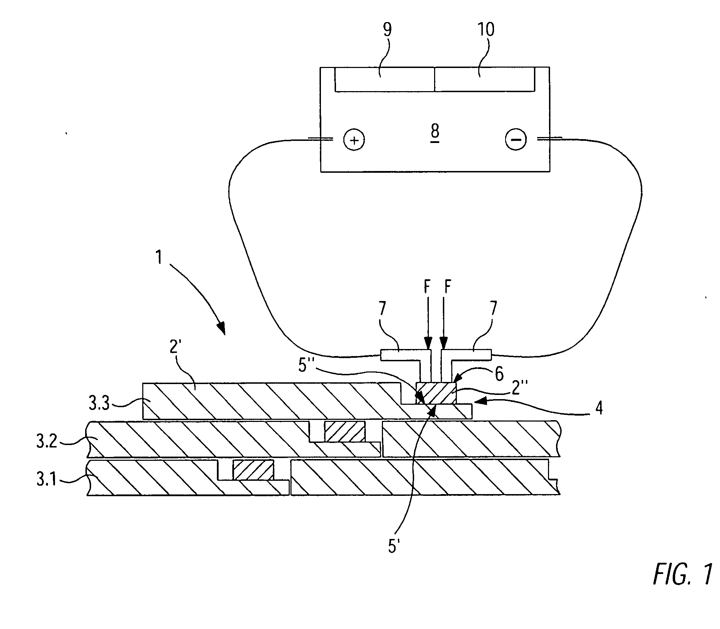

Fig. 1 veranschaulicht einen Lötvorgang durch eine Querschnittansicht von Wicklungslagen und auf ein Formteil der obersten Wicklungslage aufgesetzten Lötelektroden. Vor einer detaillierten Beschreibung der Fig. 1 folgen zunächst verschiedene Erläuterungen zu den Ausführungsformen.

Bei den Ausführungsformen werden die miteinander zu verbindenden Formteile verlötet, also durch Schmelzen eines in den Lötspalt eingebrachten Metalls miteinander verbunden. Bei einigen der Ausführungsformen liegt die Arbeitstemperatur unterhalb 450°C, und entsprechend wird ein Lot (z.B. auf Zn- und/oder Pb-Basis) verwendet, das bei einer Temperatur unterhalb 450°C schmilzt; es handelt sich bei den Ausführungsformen also um Weichlötverfahren.

Bei dem - unten noch näher erläuterten - Auflegen einer neuen Lage von Formteilen auf eine bereits aufgebaute Lage von bereits miteinander verlöteten Formteilen kommen die zu verlötenden Verbindungsflächen aufeinander zu liegen. Das benötigte Lot befindet sich bereits vor dem eigentlichen Lötvorgang zwischen den Verbindungsflächen. Sodann werden bei den Ausführungsformen zwei Widerstandslötelektroden auf die freiliegende Oberseite des oberen der zu verbindenden Formteile im Bereich der zu verlötenden Verbindungsstelle gedrückt. Die sich dieser Druckkraft entgegenstellende Reaktionskraft wird von der oder den darunterliegenden, bereits aufgebauten Lagen von Formteilen aufgebracht. Die zu verbindenden Formteile werden hierdurch an der Verbindungsstelle zusammengedrückt. Bei den Ausführungsformen ist kein weiterer Mechanismus zum Zusammendrücken der Formteile an der Verbindungsstelle vorgesehen; das Zusammendrücken erfolgt also allein durch die Lötelektroden. Schließlich werden die aufgedrückten Widerstandselektroden spannungsbeaufschlagt, so daß ein Lötstrom durch das obere Formteil fließt, und die damit einhergehende Widerstandserwärmung eine Verlötung der Formteile an der Verbindungsstelle bewirkt.

Das Aufdrücken der Widerstandselektroden und deren Spannungsbeaufschlagung braucht selbstverständlich nicht in der genannten Abfolge erfolgen. Vielmehr kann die Spannungsbeaufschlagung zum Beispiel bereits im Augenblick des Aufdrückens erfolgen; im Prinzip ist es sogar möglich, bereits spannungsbeaufschlagte Elektroden auf das Formteil aufzusetzen.

Bei den Ausführungsformen werden sämtliche der Verlötung einer betrachtenden Verbindungsstelle dienende Lötelektroden (bei den gezeigten Ausführungsformen handelt es sich um zwei Lötelektroden, es können aber auch mehr als zwei sein) auf das obere der zu verbindenden Formteile im Bereich der Verbindungsstelle aufgedrückt. Dies bewirkt, daß der Lötstrom im wesentlichen nur in dem oberen Formteil fließt. Höchstens ein geringer Teil des Stromes wird einen Strompfad nehmen, der zweimal die zu verlötende Grenzfläche durchquert und einen Teil des Weges in dem unteren Formteil zurücklegt. Folglich wird sich praktisch nur das obere der Formteile direkt durch die Ohmschen Verluste erwärmen, das andere Formteil hingegen nur indirekt durch Wärmeleitung über die Grenzfläche.

Beim Aufdrücken von mehreren Elektroden an der Verbindungsstelle addieren sich die Einzel-Elektrodenkräfte. Die Elektrodenkraft dient - wie erwähnt - auch dem Zusammendrücken der Verbindungsflächen, nicht nur der Kontaktvermittlung zwischen Elektrode und Formteil, und ist daher größer, als es nur zur Kontaktvermittlung nötig wäre. Beispielsweise beträgt bei einigen Ausführungsformen die gesamte Elektrodenkraft pro Lötstelle 0,1kN bis 0,3 kN (bei zwei Elektroden also 0,05 kN bis 0,15 kN pro Elektrode). Typische Kräfte zur Kontaktvermittlung liegen bei 0,01 kN bis 0,02 kN pro Elektrode).

Bei einigen der Ausführungsformen sind die Formteile mit einer isolierenden Oberfläche versehen, beispielsweise einer Schicht aus Isolierlack oder einer nicht-leitenden Oxidschicht. Bei diesen Ausführungsformen ist die Oberfläche jedoch an bestimmten Stellen nicht isolierend, sondern leitend ausgebildet. Hierbei handelt es sich einerseits um die Verbindungsflächen und andererseits um diejenige Stelle an der Oberseite, an der die Lötelektroden auf das Formteil aufgedrückt werden. Nach dem Verlöten haben diese isolationsfreien Stellen auf der Oberseite der Formteile keine Funktion mehr. Theoretisch stellt die fehlende Isolation auf den Formteil-Oberseiten Schwachstellen dar, da die nächste Formteillage auf diese Oberseiten aufgesetzt wird. Es wurde jedoch erkannt, daß, im Gegensatz etwa zu den Verhältnissen bei einer Schweißverbindung, beim Löten kein Aufschmelzen des Formteil-Materials stattfindet und sich daher keine Materialspitzen oder ähnliches an der Formteiloberseite bilden, und daß daher die auf der isolationsfreien Oberseite zu liegen kommende isolierende Oberflächenschicht auf der Unterseite des darübergelegten Formteils eine ausreichende Isolation bietet. Bei einigen Ausführungsformen bleiben daher die genannten Stellen in der fertigen Wicklung isolationsfrei; es wird also nach dem Herstellen der Lötverbindung kein Isolierpapier oder ähnliches aufgelegt oder Isolierlack aufgetragen.

Das die Lötverbindung bewirkende Lot befindet sich bereits vor der Widerstandserwärmung zwischen den Verbindungsflächen, wird also zusammen mit den zu verbindenden Formteilen erwärmt. Bei einigen der Ausführungsformen ist eines der Formteile oder beide Formteile an der Verbindungsfläche mit Lot plattiert (verzinnt), bevor die Formteile eingebaut und verlötet werden. Gegebenenfalls kann an den Verbindungsflächen auch ein Flußmittel aufgetragen sein. Bei anderen Ausführungsformen wird das Lot (gegebenenfalls mit Flußmittel) z.B. als Lötpulver oder Lötpaste beim oder vor dem Einbau und vor der Widerstandserwärmung auf die Verbindungsfläche der Formteile aufgetragen.

Bei einigen der Ausführungsformen wird der Andruck der Lötelektroden nach Beendigung der Spannungsbeaufschlagung noch wenigstens bis zum Erstarren des Lots aufrechterhalten.

Im Zusammenhang mit den Ausführungsformen wird beispielhaft die Herstellung einer Formteilwicklung nach der in der WO 01/954621 A1 beschriebenen Art näher erläutert. Bei diesem Wicklungstyp sind zu verschiedenen Strängen gehörende Spulen überlappend angeordnet. Entsprechend erfolgt der Aufbau der Wicklung nicht in Form einzelner Spulen, die etwa nacheinander in dem mit der Wicklung auszurüstenden Ständer aufgebaut werden; vielmehr wird die gesamte Wicklung lagenweise aus einzelnen Formteilen aufgebaut. Die Verbindungsstellen der Formteile werden jeweils durch eine neue Lage oder Teillage von Formteilen verdeckt. Abgesehen von deren Stirnseiten sind die Formteile also nur von einer Seite zugänglich, solange die Formteile der nächsten Lage bzw. Teillage noch nicht aufgelegt sind. Beispielsweise bei Innenläufermaschinen sind die Nuten des Ständers zur Achse der Maschine hin offen, der lagenweise Aufbau der Wicklung erfolgt dann von außen nach innen, zur Achse hin, so daß die jeweils zugängliche Formteilseite die zur Achse weisende Seite ist (die zugängliche Seite wird in dieser Beschreibung auch die "obere Seite" genannt). Die Verlötung der einzelnen Formteile erfolgt jeweils dann, wenn die Verbindungsstellen noch an der Oberseite zugänglich sind; sie erfolgt also zum Beispiel ebenfalls lagenweise oder teillagenweise. Dabei ist es möglich, immer abwechselnd sämtliche Formteile einer neuen Lage oder Teillage auf eine bereits aufgebaute Lage zu setzen, und dann die zu dieser Lage gehörenden elektrischen Verbindungen herzustellen. Alternativ ist es auch möglich, jeweils nur Teile einer Lage bzw. Teillage (zum Beispiel jeweils nur ein einzelnes Formteil) auf die bereits aufgebaute Lage zu setzen und dann sogleich die zugehörige Verlötungen herzustellen.

Im allgemeinen hat jedes Formteil an seinen beiden Enden jeweils eine Verbindungsfläche. Bei einigen der Ausführungsformen sind die Formteile L-förmig, umfassen also einen, in eine Nut des Ständers einzulegenden Nutstab und, rechtwinklig zu diesem angeordnet, einer Verbindungsleiterabschnitt, welcher außerhalb des Ständers in Tangentialrichtung verläuft und der Verbindung zur anderen Spulenseite der betreffenden Spule dient. Jeweils zwei solcher L-förmigen Formteile bilden so eine Windung einer Spule; eine Spule wiederum wird durch wendelartige Übereinanderanordnung mehrerer solcher Windungen gebildet. Bei einigen der Ausführungsformen liegen die beiden Nutstäbe einer Windung auf gleicher Höhe, d.h. in gleichem Radialabstand zur Achse der Maschine. Entsprechend gibt es zwei verschiedene Arten von Verbindungen: Die erste Art verbindet das betreffende Formteil mit der darunter- oder darüberliegenden Windung, die zweite Art verbindet die beiden Formteile einer Windung. Die Gesamtheit aller Windungen auf gleicher Höhe bildet eine Wicklungslage (auch "Formteillage" genannt).

Bei anderen Ausführungsformen werden andere als L-förmige Formteile verwendet, beispielsweise gestreckte Formteile ("I-Formteile"), welche beispielsweise jeweils nur die Nutstäbe oder die Verbindungsleiter bilden. Entsprechend sind hier doppelt so viele elektrische Verbindungen herzustellen wie bei einer aus L-förmigen Formteilen hergestellten Wicklung. Zum Aufbau der Wicklung werden die Nutstäbe lagenweise in die Nuten des Ständers eingesetzt; dann wird an jeweils zwei eingesetzte Nutstäbe ein Verbindungsleiter gelötet. Möglich sind z.B. auch U-förmige Formteile, bei denen die Basis des "U" in die Ständernuten eingesetzt wird, und die Schenkel des "U" mit den U-Schenkeln anderer Formteile zur Bildung der Verbindungsleiter zusammengelötet werden. Im übrigen gelten die folgenden und vorstehenden Ausführungen zu L-Formteilwicklungen auch auf derartige I- und U-Formteilwicklungen zu, beispielsweise was den lagenweisen Aufbau der Wicklung und die Verdeckung der Verbindungsstellen durch darüberliegende Lagen betrifft.

Bei überlappender Spulenanordnung werden die Verbindungsleiter mehrerer Spulen außen am Ständer aneinander vorbei geführt. Obwohl es grundsätzlich möglich ist, die Verbindungsleiter der einzelnen Spulen zu bündeln und diese Vorbeiführung durch eine Ausweichung dieser Bündel (zum Beispiel in Axialrichtung) zu realisieren, sind bei einigen der Ausführungsformen die Verbindungsleiter verschiedener Spulen kammartig überlappend angeordnet. Hierzu sind die Formteile so aufgebaut, daß die Höhe des Formteils im Verbindungsleiterbereich geringer als im Nutstabbereich ist. Wenn sich beispielsweise die Verbindungsleiter von drei Spulen überlappen, beträgt die Höhe eines einzelnen Verbindungsleiters etwa ein Drittel der Höhe des Nutstabs, damit im Verbindungsleiterbereich dreimal so viele Leiter wie jeweils im Nutstab übereinander geschichtet werden können. Bei manchen der Ausführungsformen sind zur Vermeidung einer Querschnittsminderung die Verbindungsleiter entsprechend breiter ausgebildet, zum Beispiel dreimal so breit wie die Nutstäbe.

Damit die zwischen den einzelnen Formteilen herzustellenden Verbindungen nicht auftragen, haben die Formteile im Bereich der Verbindungsstellen verringerte Höhen. Beispielsweise weisen die Nutstäbe an ihren aus den Nuten überstehenden Enden abgeflachte Zungen auf; die flächigen Verbindungsleiter weisen jeweils eine Vertiefung auf, welche diese abgeflachte Nutstabzunge ohne Überstand aufnimmt.

Bei manchen Ausführungsformen weist der Verbindungsleiter also eine geringere Höhe als der Nutstab auf, ist dafür zum Ausgleich jedoch breiter als dieser ausgebildet; insgesamt ist der Verbindungsleiter also "flächiger" als der Nutstab. Bei einigen dieser Ausführungsformen wird die Wicklung so aufgebaut, daß das an der Verbindungsstelle flächigere Formteil jeweils unten und das weniger flächige oben liegt. Die Elektroden drücken somit das weniger flächige Formteil auf das flächigere, was eine günstigere Verteilung der Elektrodenkräfte auf die darunterliegende Lage und damit eine Verringerung der Gefahr einer Verletzung der elektrischen Isolierung zu dieser Lage bewirkt.

Bei dem bisher im Stand der Technik hauptsächlich eingesetzen Laserschweißverfahren wird das obere Formteil über der Verbindungsstelle durch den Laserstrahl aufgeschmolzen. Die Dicke des Formteils über der Verbindungsstelle beträgt bei dem Laserschweißverfahren zum Beispiel 0,4 mm. Es wurde nun erkannt, daß mit dem vorliegend beschriebenen Lötverfahren deutlich dickere Formteile miteinander verbunden werden können, als mit dem genannten Laserschweißverfahren, welches das obere Formteil an der Verbindungsstelle aufschmilzt. Beispielsweise beträgt bei manchen Ausführungsformen die Dicke des oberen Formteils an der Verbindungsstelle wenigstens 0,65 mm, bei weiteren Ausführungsformen wenigstens 0,9 mm; bei noch weiteren Ausführungsformen sogar wenigstens 1,2 mm oder sogar wenigstens 1,5 mm. Die Dicke der oberen Formteils an der Verbindungsstelle hängt mit der Höhe des Nutstabs zusammen: Wie oben bereits erläutert wurde, kann bei überlappender Anordnung der einzelnen Spulen der Verbindungsleiter flacher als der Nutstab ausgebildet sein, um die Vorbeiführung der Verbindungsleiter der jeweils anderen Spulen zu ermöglichen. Wenn beispielsweise jeweils maximal drei Spulen überlappen, beträgt die Höhe der Verbindungsleiter ungefähr ein Drittel der Nutstabhöhe. Bei denjenigen Ausführungsformen, bei denen die Verbindungsstelle im Verbindungsleiterbereich angeordnet ist, steht den beiden zu verbindenden Formteilen an der Verbindungsstelle zusammen nur die Verbindungsleiterhöhe zur Verfügung; das heißt die beiden Formteile teilen sich die Verbindungsleiterhöhe auf. Teilen sie sich die Höhe beispielsweise zu gleichen Teilen auf, so ist der Nutstab z.B. um einen Faktor 6 höher als das obere Formteil an der Verbindungsstelle. Beträgt beispielsweise die Dicke des oberen Formteiles an der Verbindungsstelle nur 40% der Verbindungsleiterhöhe, und diejenige des unteren Verbindungsteils 60% von dieser, so beträgt der genannte Faktor 7,5. Beträgt beispielsweise im Stand der Technik die Dicke des oberen Formteils an der Verbindungsstelle 0,5 mm, so beträgt die Nutstabhöhe (bei gleichmäßiger Aufteilung der Verbindungsleiterhöhe) 3 mm. Wenn beispielsweise die Nuten eine Gesamthöhe von 12 mm aufweisen, bedarf es dann vier Spulenwindungen, um die Nuten mit stromdurchflossenem Leiter auszufüllen. Bei der mit dem vorliegenden Lötverfahren möglichen Erhöhung der Dicke des oberen Formteils an der Verbindungsstelle auf beispielsweise 0,65 mm ergibt sich eine Höhe des Nutstabs von 3,9 mm, so daß zum Ausfüllen der beispielhaft genannten Nutspulen nun drei (statt vier) Wicklungen ausreichen. Die Anwendung des beschriebenen Lötverfahrens ermöglicht also Maschinenkonstruktionen, bei denen die Wicklung - bei sonst gleichen Abmessungen - weniger Spulenwindungen hat, und somit - wegen der hierdurch geringeren Anzahl von herzustellenden Verbindungen, mit weniger Aufwand herstellbar ist. Durch die Vergrößerung der Nutstabhöhe haben die Nutstäbe bei manchen Ausführungsformen eine quadratische Querschnittsform, bei einigen Ausführungsformen sogar eine rechteckige Querschnittsform, wobei sich die längere Rechtecksseite in der Tiefenrichtung der Nut (also im allgemeinen in der Radialrichtung der elektrischen Maschine) erstreckt.

Bei einigen der Ausführungsformen wird der Lötstrom während des Lötvorgangs gemessen, und es wird hieraus auf die Güte der Lötverbindung geschlossen. Beispielsweise kann ein im Einzelfall zu hoher Übergangswiderstand zwischen Lötelektrode und Formteil zur Folge haben, daß der fließende Lötstrom zu niedrig ist, um ein vollständiges Aufschmelzen und Verschmelzen des Lots der beiden Formteiloberflächen zu bewirken. Der Lötstrom kann beispielsweise durch Messung der Größe eines Spannungsabfalls in der Lötstromquelle oder durch Messung eines vom Lötstromfluß erzeugten Magnetfelds gemessen werden. Ein zu niedriger Lötstrom kann beispielsweise dadurch festgestellt werden, daß der über einen Lötvorgang integrierte Lötstrom einen vorbestimmten Schwellenwert nicht überschreitet, oder dadurch, daß der momentane Stromwert nicht wenigstens während einer vorbestimmten Mindestzeit über einem vorbestimmten Mindestwert lag.

Bei einigen der Ausführungsformen werden die zu verlötenden Formteilpaare, eines nach dem anderen, mit Hilfe einer Einzel-Lötvorrichtung verlötet. Beispielsweise kann die Lötvorrichtung stationär und der Ständer mit der herzustellenden Wicklung demgegenüber drehbar angeordnet sein. Durch Weiterdrehen, z.B. entsprechend jeweils einem doppelten Nutabstand, kann so Schritt für Schritt eine neu eingelegte Wicklungs-Teillage verlötet werden.

Bei anderen Ausführungsformen findet eine Mehrfach-Lötvorrichtung Verwendung, mit der simultan mehrere oder alle Verbindungsstellen einer Lage oder Teillage von Formteilen in der hier beschriebenen Art und Weise verlötet werden.

Bei einigen Ausführungsformen ist die hergestellte Wicklung für eine elektrische Maschine bestimmt, welche als Starter-Generator eines Kraftfahrzeugs ausgebildet ist. Bei manchen Ausführungsformen handelt es sich hierbei um einen sog. Kurbelwellen-Starter-Generator, also um eine elektrische Maschine, welche ohne eigenes Lager auf der Kurbelwelle oder einer Kurbelwellenverlängerung des Verbrennungsmotors sitzt. Bei einigen Ausführungsformen ist der Läufer der elektrischen Maschine drehfest mit der Kurbelwelle gekoppelt, d.h. er dreht permanent mit der gleichen Zahl wie der Verbrennungsmotor, bei anderen Ausführungsformen ist hingegen zwischen Kurbelwelle und dem Läufer der elektrischen Maschine eine Kupplung oder ein Über- oder Untersetzungsgetriebe (z.B. in Form eines Planetengetriebes) geschaltet. Ein derartiger Kurbelwellen-Starter-Generator ist im allgemeinen scheibenförmig, d.h. der Durchmesser des Läufers ist größer als dessen Axiallänge. Bei anderen Ausführungsformen ist der Starter-Generator mit einer eigenen Lagerung ausgerüstet und an geeigneter Stelle im Antriebsstrang oder einem mit dem Antriebsstrang koppelbaren Nebenantriebsstrang angeordnet. Auch die genannte elektrische Maschine mit Eigenlager kann die oben definierte Scheibenform haben.

Die Dauerleistung derartiger Starter-Generatoren liegt im allgemeinen im Bereich zwischen 4 kW und 50 kW. Neben der Funktion als Generator und Direktstarter (d.h. Starter, der den Verbrennungsmotor aus dem Stand, mit gleicher Drehzahl oder gleicher Relativdrehzahl wie dieser drehend, starten kann) dient die elektrische Maschine bei einigen Ausführungsformen auch als Booster, der den Verbrennungsmotor beim Antrieb des Fahrzeugs unterstützt, als alleiniger Antriebsmotor bei Fahrt ohne Verbrennungsmotor, und/oder als Rekuperationsbremse für das Fahrzeug, welche mechanische Bremsenergie in zu speichernde elektrische Energie umsetzt. Derartige elektrische Maschinen sind aufgrund der Unterschiedlichkeit der im Betrieb anfallenden Leistungsanforderungen und der harten Umgebungsbedingungen in besonderem Maße beansprucht, etwa verglichen mit üblichen stationären Antrieben.

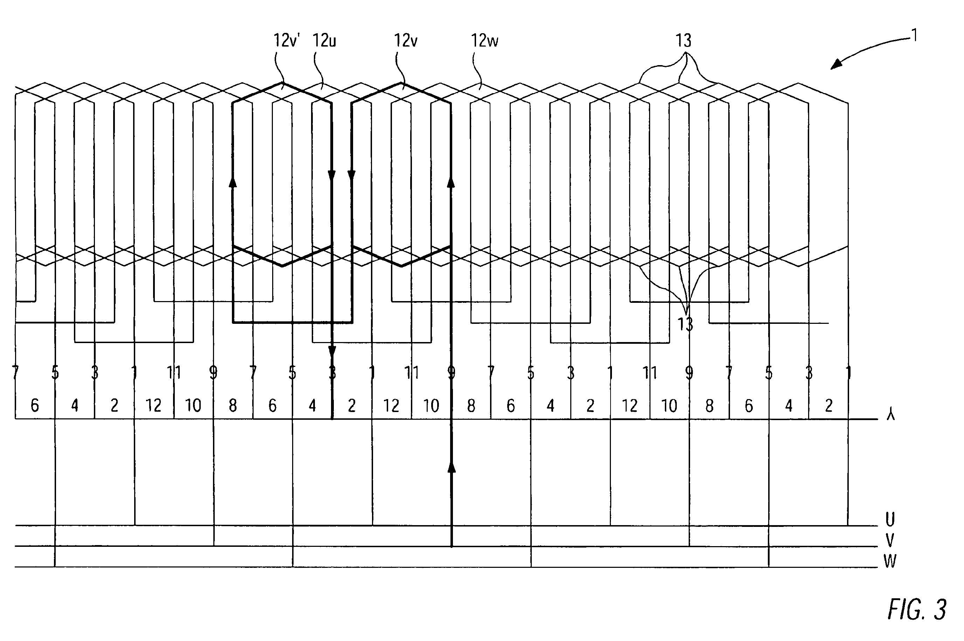

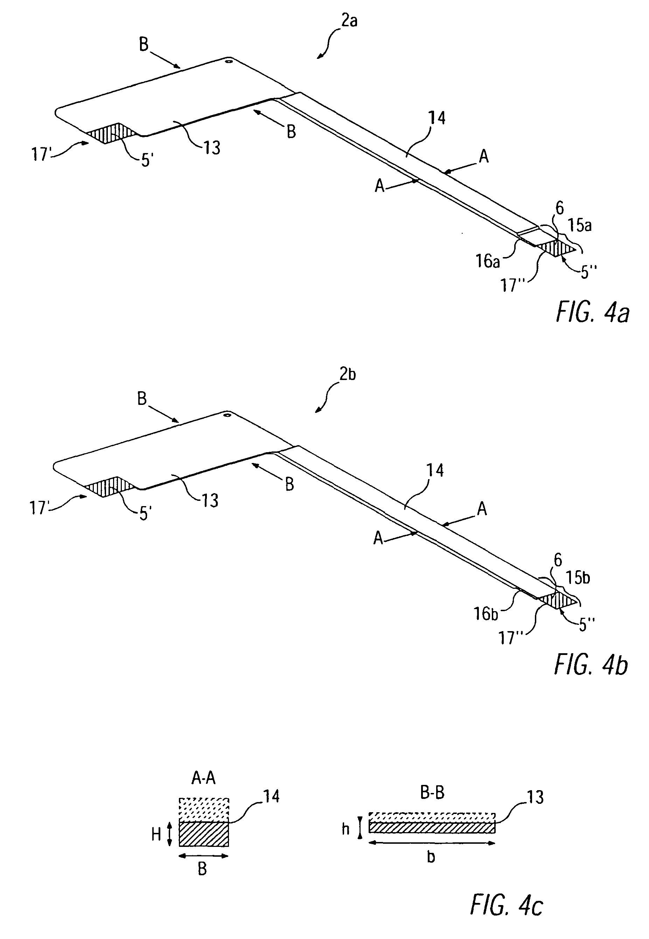

Nun zurückkehrend zu Fig. 1, zeigt diese zur Veranschaulichung des Lötvorgang eine Querschnittansicht eines Teils einer im Aufbau befindlichen Wicklung 1, die hier zur besseren Verständlichkeit eben dargestellt ist. Die Wicklung 1 wird aus einzelnen Formteilen 2 aufgebaut, was anhand einer beispielhaften Wicklung unten im Zusammenhang mit den Fig. 3 bis 7 noch näher erläutert wird. Wie ebenfalls noch unten näher erläutert wird, erfolgt der Aufbau der Wicklung 1 lagenweise; in der Darstellung gemäß Fig. 1 sind zwei solche Wicklungslagen 3.1, 3.2 bereits fertig zusammengesetzt und verlötet, während sich eine dritte Wicklungslage 3.3 gerade im Aufbau befindet. In dieser Lage 3.3 sind zwei Formteile 2', 2" so zusammengefügt, daß sie an einer Verbindungsstelle 4 mit jeweils einer Verbindungsfläche 5', 5" aufeinander liegen. Bei dem gezeigten Beispiel sind beide Verbindungsflächen 5', 5" vorverzinnt. Das an der Verbindungsstelle 4 obere der beiden Formteile, nämlich das Formteil 2", ist im Bereich der Verbindungsstelle 4 an seiner Oberseite 6 elektrisch leitend ausgebildet; dieser elektrisch leitende Oberflächenbereich dient als Kontaktfläche für zwei Widerstandslötelektroden 7. Bei einigen Ausführungsformen ist zwecks Kontaktverbesserung auch die Kontaktfläche 6 vorverzinnt, obgleich keine Verlötung, wie an den Verbindungsflächen 5 stattfindet. Die gesamte übrige Oberfläche der Formteile 2, abgesehen von den entsprechenden Verbindungs- und Kontaktflächen an den anderen Enden (Fig. 4), sind mit einem Isolierlack überzogen.

Um nun die in der geschilderten Weise zusammengefügten Formteile zu verlöten, werden die beiden Widerstandselektroden 7 auf die Kontaktfläche 6 des an der Verbindungsstelle 4 oberen Formteils 2" aufgedrückt, und zwar jeweils mit einer Kraft F. Die Einzel-Elektrodenkraft F beträgt 0,05 kN bis 0,15 kN pro Elektrode, beispielsweise 0,1 kN. Hierdurch wird das obere Formteil 2" auf das untere Formteil 2' gedrückt (mit einer Gesamtkraft von 0,1 kN bis 0,3 kN, beispielsweise 0,2 kN), und dieses wird wiederum auf die darunterliegenden, bereits aufgebauten Formteillagen 3.1, 3.2 gedrückt. Die Druckkraft wird schließlich an der untersten Formteillage 3.1 zum Beispiel von dem Ständer aufgenommen, in den die Lagen 3 eingesetzt sind; alternativ ist es auch möglich, die unterste Formteillage 3.1 an ihren aus dem Ständer ragenden Teilen seitlich an einer Auflage abzustützen. Durch das Aufdrücken der Lötelektroden 7 und die von den bereits aufgebauten Formteillagen 3.1, 3.2 entgegengestellte Reaktionskraft werden die zu verbindenden Formteile 2', 2" also an der Verbindungsstelle 4 zusammengedrückt. Bei sehr großen Druckkräften könnte beim Lötvorgang das Lot zwischen den zu verlötenden Formteilen herausgedrückt werden.

Dann werden die Widerstandselektroden 7 mit Hilfe eines Lötgenerators 8 mit einer geeigneten Lötspannung beaufschlagt, so daß ein elektrischer Strom im wesentlichen im oberen Formteil 2" im Bereich der Verbindungsstelle 4 fließt. Hierbei handelt es sich beispielsweise um Gleichstrom, Wechselstrom oder Halbwellenstrom. Bei Verwendung von Wechselstrom oder Halbwellenstrom läßt sich die bei einem Lötvorgang fließende Strommenge (das heißt die transportierte Ladung) auf einfache Weise steuern, indem man bei festgelegter Spannungsamplitude die Zahl der Voll- oder Halbwellen pro Lötvorgang vorgibt. Der im oberen Formteil 2" fließende Strom erwärmt dieses direkt. Durch Wärmeleitung über den Lötspalt erwärmt er indirekt auch das untere Formteil 2' im Bereich der Verbindungsstelle so, daß das durch die Vorverzinnung aufgebrachte Lot auf den Verbindungsstellen schmilzt. Nach einer sogenannten Haltezeit wird der Lötstrom abgeschaltet. Die Lötelektroden 7 werden weiterhin aufgedrückt, bis das Lot wieder erstarrt ist. Anschließend werden die Lötelektroden 7 abgehoben und auf die nächste zu verlötende Verbindungsstelle umgesetzt, wo sich der beschriebene Vorgang wiederholt.

Der Lötgenerator 8 ist mit einem Lötstromanalysator 9 ausgerüstet, welcher - wie oben erläutert - den beim Lötvorgang fließenden Strom mißt, den gemessenen Strom gegebenenfalls über den Lötvorgang aufsummiert, und hieraus auf die Qualität der Verlötung schließt. Bei manchen Ausführungsformen hat diese Lötstromanalyse nur eine Überwachungsfunktion, das heißt im Fall der Detektion eines nicht ordnungsgemäßen Stromflusses erfolgt beispielsweise ein entsprechender Hinweis an eine den Lötvorgang überwachende Bedienungsperson. Bei anderen Ausführungsformen ist der Lötstromanalysator 9 so mit einer Steuereinheit 10 des Lötgenerators 8 gekoppelt, daß noch im Verlauf des Lötvorgangs gegebenenfalls ein korrigierender Eingriff erfolgt. Wenn beispielsweise die Verlötung üblicherweise mit einer voreingestellten Zahl von n Halbwellen (zum Beispiel 6 Halbwellen) erfolgt, so kann im Fall einer Detektion eines nicht ausreichenden Stromflusses während dieser n Halbwellen der Lötvorgang um bis zu m weitere Halbwellen fortgesetzt werden (zum Beispiel um weitere 3 Halbwellen), in Abhängigkeit vom Ergebnis der Lötstromanalyse beim jeweiligen Lötvorgang.

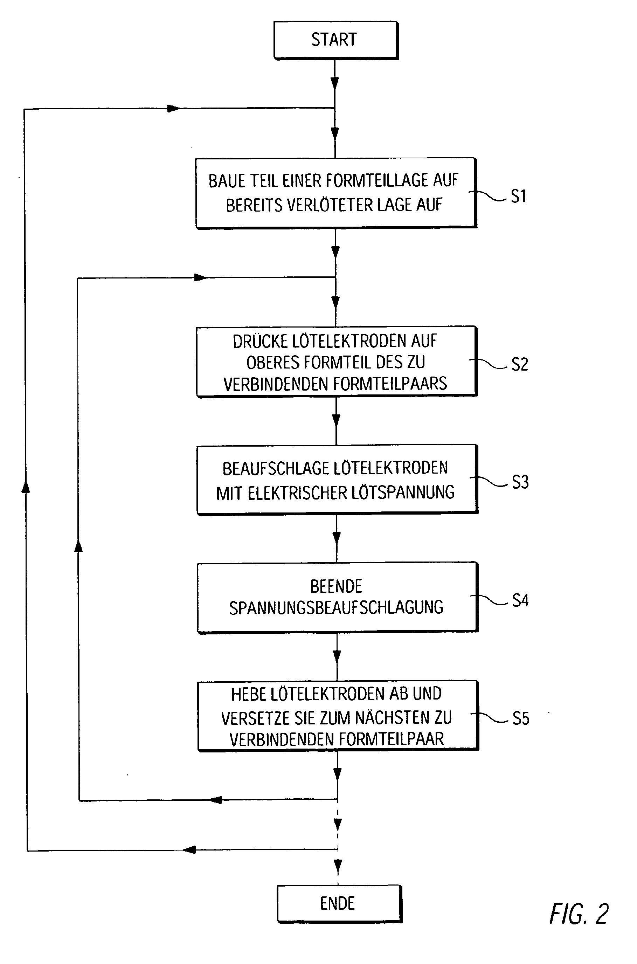

Der oben beschriebene Verfahrensablauf ist in Fig. 2 in Form eines Flußdiagramms dargestellt. Zunächst wird ein Teil einer Formteillage auf einer bereits verlöteten Formteillagen aufgebaut (S1). Wie im Zusammenhang mit den folgenden Fig. 4 bis 7 noch näher erläutert wird, kann es sich bei diesem Teil beispielsweise um jedes zweite Formteil einer Lage handeln, zum Beispiel um diejenigen Formteile, die mit Formteilen der darunterliegenden, bereits verlöteten Lage zu verlöten sind. Dann werden die Lötelektroden von oben (das heißt von der zugänglichen Seite) auf das obere Formteil eines zu verbindenden Formteilpaars gedrückt (S2). Anschließend werden die Lötelektroden mit elektrischer Lötspannung beaufschlagt (S3). Der nun fließende Lötstrom bringt das Lot zwischen den Verbindungsflächen der beiden Formteile zum Schmelzen. Nach einer Haltezeit wird die Spannungsbeaufschlagung beendet (S4). Nach Erstarren des - die beiden Formteile nun verbindenden - Lots werden die Lötelektroden abgehoben und zum nächsten zu verbindenden Formteilpaar versetzt (S5). Die Abfolge S2 bis S5 wird solange wiederholt, bis alle Formteile des genannten Teils der Formteillage entsprechend verlötet sind. Sodann wird ein weiterer Teil einer Formteillage aufgelegt (S1), beispielsweise die zur Komplettierung der vorliegenden Lage noch fehlende andere Hälfte von Formteilen, die nun mit den soeben eingebauten Formteilen verlötet werden. Es folgt wiederum die Abfolge S2 bis S5 für diese Formteile des zweiten Teils der Formteillage. Die Abfolge S2 bis S5 wird solange wiederholt, bis sämtliche Lagen der Wicklung fertiggestellt sind.

Die folgenden Fig. 3 - 7 zeigen in Einzelheiten den Aufbau einer beispielhaften Formteilwicklung unter Einsatz des oben beschriebenen Verfahrens.

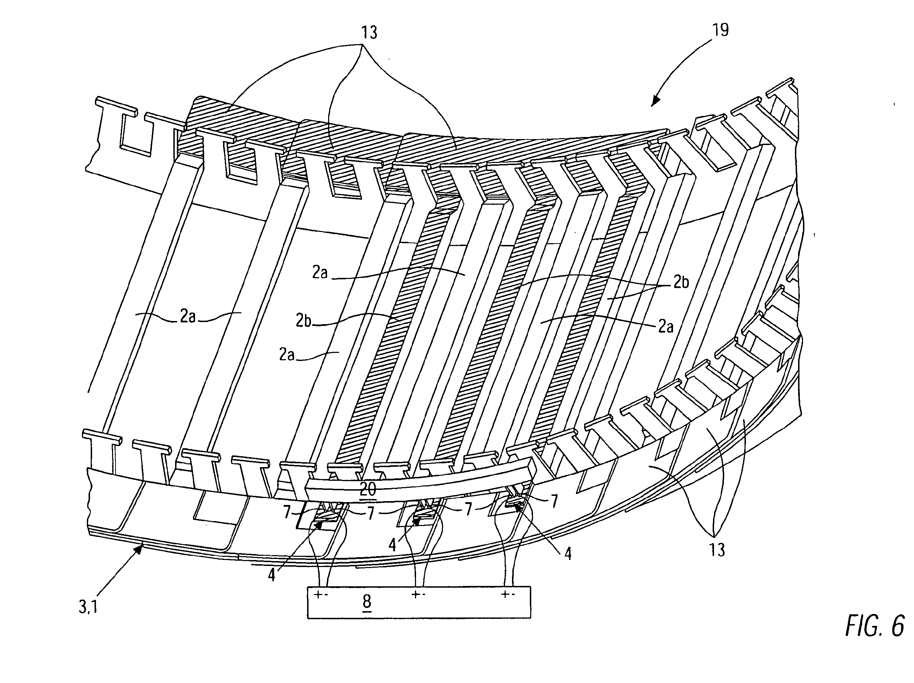

Fig. 3 zeigt ein Wicklungsschema einer solchen beispielhaften Wicklung 1, die dreisträngig ausgeführt ist. Das Wicklungsschema wiederholt sich alle zwölf Nuten des Ständers (Fig. 6). Die zu den verschiedenen Strängen U, V, W gehörenden Spulen 12u, 12v, 12w sind überlappend angeordnet. Jede Spule 12 weist in zwei Nuten gegenüberliegend verlaufende Leiterabschitte (sogenannte Spulenseiten) sowie diese verbindende, außen am Ständer verlaufende Verbindungsleiter 13 auf. Bei dem gezeigten Beispiel ist die Wicklung 1 so ausgebildet, daß die Verbindungsleiter 13 von maximal drei Spulen 12 aneinander vorbeigeführt werden, wobei zwischen den Spulenseiten einer Spule 12 z.B. jeweils vier Spulenseiten von Spulen 12 anderer Stränge liegen.

Grundsätzlich können sämtliche Spulen 12 eines Stranges parallel oder in Serie geschaltet sein; daneben sind auch Serien-Parallel-Schaltungen möglich. Fig. 4 zeigt beispielhaft eine derartige Serien-Parallel-Schaltung, bei der jeweils zwei benachbarte Spulen 12 eines Stranges in Serie geschaltet sind, und alle diese so gebildeten Spulenpaare eines Stranges wiederum parallel geschaltet sind. Zur Veranschaulichung ist eine solche Serienschaltung in Fig. 4 fett hervorgehoben, und zwar die Serienschaltung der Spulen 12v und 12v'. Wegen weiterer Einzelheiten des Wicklungsschemas wird auf die eingangs genannte WO 01/9546 A1 und die ähnliche DE 101 11 509 A1 verwiesen.

Eine Wicklung von der in Fig. 3 gezeigten Art wird aus einzelnen Formteilen hergestellt, die jeweils Teilabschnitte von Spulenwindungen darstellen. Durch das oben bereits näher beschriebene Verlöten dieser Teilabschnitte entsteht eine vollständige Wicklung mit wendelförmigen Spulen.

Bei einer beispielhaften Ausführungsform gemäß Fig. 4 erfolgt der Aufbau der Wicklung 1 aus L-förmigen Formteilen 2, die jeweils einen Nutstab 14 und einen rechtwinklig daran anschließenden Verbindungsleiter 13 aufweisen. Mit zwei L-förmigen Verbindungsleitern 2 erhält man eine vollständige (d.h. über 360° umlaufende) Spulenwindung; jedes Formteil 2 ist also eine Halbwindung. Bei der im folgenden näher beschriebenen Ausführungsform läßt sich die Wicklung 1 im wesentlichen aus nur zwei verschiedenen Typen von Formteilen 2 aufbauen, von denen ein Typ (2a) in Fig. 4a und der andere (2b) in Fig. 4b gezeigt ist. Der erste Typ 2a ist eine Teilwindung mit Anschluß an die darunterliegende Windung der Spule; während der zweite Typ 2b eine Teilwindung ist, die die zur selben Windung wie die erste Teilwindung gehört.

Die Verbindungsleiter 13 sind flacher und breiter ausgebildet als die Nutstäbe 14, wie die Querschnittansichten gemäß Fig. 4c veranschaulichen. Und zwar weisen die Nutstäbe 14 eine Höhe H und eine Breite B auf, wobei letztere beispielsweise so gewählt ist, daß der Nutstab 14 in der Breite eine Nut ausfüllt. Die Höhe h des Verbindungsleiters 13 beträgt beispielsweise ein Drittel der Höhe H des Nutstabs 14, während umgekehrt die Breite b des Verbindungsleiters 13 etwa dreimal so groß ist wie die Breite B des Nutstabs 14. Der Leiterquerschnitt ist also in Nutstab 14 und Verbindungsleiter 13 ungefähr gleich. Die Unterseiten von Nutstab 14 und Verbindungsleiter 13 liegen auf einer Ebene, die Oberseite des Nutstabs 14 liegt jedoch entsprechend der Differenz H-h höher als die Oberseite des Verbindungsleiters 13. Wie oben erwähnt, werden bei manchen Ausführungsformen dickere Formteile als die bisher im Stand im Stand der Technik üblichen verwendet, so daß die Nutstäbe 14 beispielsweise einen Rechteckquerschnitt mit der längeren Rechteckseite in Nutrichtung (Radialrichtung) haben, wie in Fig. 4c durch gestrichelte Linien veranschaulicht ist.

Am freien Ende des Nutstabs 14 weisen die Formteile 2 jeweils eine abgeflachte Zunge 15 auf, deren Dicke zunächst in einem Ansatzbereich 16 ungefähr der Höhe h des Verbindungsleiters 13 und in einem daran anschließenden Verbindungsbereich 17" nur noch einen Bruchteil der Höhe h beträgt, z.B. die Hälfte oder das 0,4-fache die Höhe h. Bei dem in Fig. 4a gezeigten ersten Formteiltyp 2a liegt der Ansatzbereich 16a der Zunge 15a auf gleicher Höhe wie der Verbindungsleiter 13, also an der unteren Seite des Nutstabs 14. Bei dem in Fig. 4b gezeigten zweiten Formteiltyp 2b liegt die Zunge 15b hingegen an der oberen Seite des Nutstabs 14. Bei beiden Fromteiltypen erfolgt der Übergang zwischen den Bereichen 16 und 17" durch eine Stufe, die bei beiden Formteiltypen an der Unterseite der Zunge 15 liegt. Der Verbindungsbereich 17" läßt also auf der Unterseite gegenüber dem Ansatzbereich 16 jeweils einen Raum in Höhe ca. eines Sechstels der Nutstabdicke frei. Diese Unterseite bildet jeweils die Verbindungsfläche 5" des an der Verbindungsstelle oberen Formteils 2", die in der bei Fig. 1 und 2 erläuterten Weise mit der komplementären Verbindungsfläche 5' des unteren Formteils 2' derselben Wicklungslage 3 oder einer darunter- oder darüberliegenden Lage verlötet wird.

Am freien Ende weisen die Verbindungsleiter 13 jeweils einen Verbindungsbereich 17' auf, bei dem die Höhe des Verbindungsleiters 13 im Bereich der Oberseite beispielsweise auf die Hälfte bzw. das 0,6-fache der Höhe h des Verbindungsleiters 13 verringert ist. Die Oberseite dieses Verbindungsbereichs 17' oder ein Teil von ihr bildet die Verbindungsfläche 5'. Die Summe der Dicken des Verbindungsbereichs 17" an der Zunge 15 des Nutstabs 14 und des Verbindungsbereichs 17' am Verbindungsleiter 13 ist also so gewählt, daß sie ungefähr der Verbindungsleiterhöhe h entspricht.

Die Formteile 2 weisen eine isolierende Oberfläche auf, gebildet z.B. durch eine Isolierlackschicht. Keine isolierende Oberfläche haben jedoch die Verbindungsflächen 5' und 5", und ferner die Kontaktfläche 6, die auf der Oberseite der Zunge 15 des Nutstabs 14 liegt und ungefähr deckungsgleich mit der Verbindungsfläche 5" ist. Eine oder beide Verbindungsflächen 5', 5" sind z.B. mit Lot plattiert, z.B. verzinnt. Auch die Kontaktfläche 6 kann verzinnt sein.

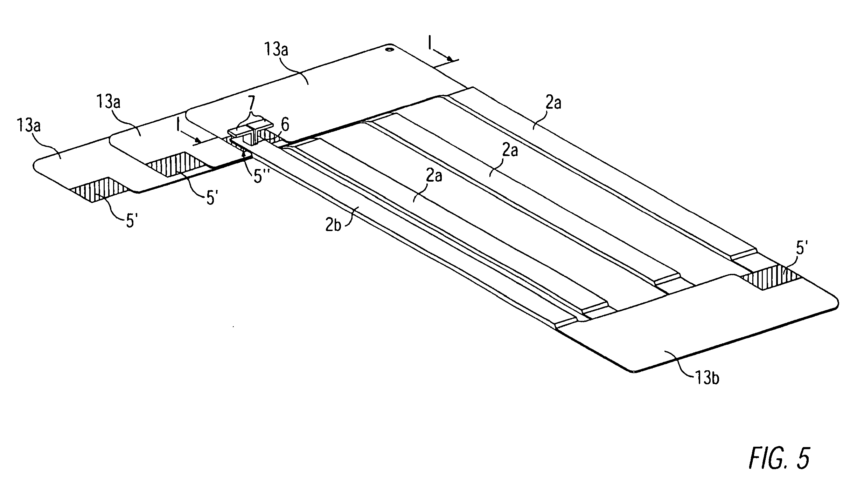

Fig. 5 erläutert den lagenweisen Aufbau der beispielhaften Wicklung mit überlappenden Spulen aus den Formteilen gemäß Fig. 4 mit dem Lötverfahren gemäß Fig. 1 und 2. Die in Fig. 5 mit "I - I" gekennzeichnete Ansicht entspricht der Schnittansicht der obersten Formteillage 3.3 und der Lötelektroden 7 von Fig. 1. Die Formteile 2 sind hier - wie in Fig. 1 - der Einfachheit halber ohne Ständerkörper und auf einer ebenen Fläche liegend dargestellt; in einem Ständerkörper einer Radialfeldmaschine sind sie hingegen auf der Innenmantelfläche eines Zylinders angeordnet (Fig. 6). Es sei angenommen, daß bereits wenigstens eine Wicklungslage aufgebaut ist, daß es sich also mit der gezeigten Wicklungslage um eine weitere (zum Beispiel die dritte Lage von Fig. 1) handelt (die erste Wicklungslage kann nämlich Besonderheiten hinsichtlich des Anschlusses der Formteile aufweisen, wie beispielsweise in der eingangs genannten WO 09/95461 A1 erläutert ist).

Zunächst wird in einem ersten Durchgang in jede zweite Nut ein Formteil des ersten Typs 2a eingesetzt. Wie Fig. 5 zeigt, überlappen sich die Verbindungsleiter 13a von jeweils drei Formteilen 2a schuppenartig. Die Verbindungsflächen 5' auf den Verbindungsleitern 13a bleiben bei dieser schuppenartigen Anordnung frei zugänglich. Mit der jeweils anderen Verbindungsfläche 5" am Ende der Nutstabzungen 15 liegen diese zunächst eingesetzten Formteile 2a auf der anderen Stirnseite des Ständers auf Verbindungsflächen 5' der darunterliegenden Formteile auf (dies ist in Fig. 5 verdeckt durch ein bereits eingezeichnetes Formteil 2b vom zweiten Typ). Die aufeinanderliegenden Verbindungsflächen 5', 5" werden durch die Lötelektroden nach dem bei Fig. 1 und 2 beschriebenen Lötverfahren miteinander verlötet; und zwar werden beide Elektroden 7 von oben auf die (in Fig. 6 verdeckte) Kontaktfläche auf den Zungen aufgedrückt (nicht gezeigt in Fig. 5). Dabei ist es wahlweise möglich, jeweils nach dem Einsetzen eines Formteils 2a sogleich die Lötverbindung zum jeweils darunterliegenden Formteil 2b herzustellen, oder zunächst mehrere oder sämtliche Formteile des ersten Typs 2a für eine Lage in der dargestellten Weise auf die vorhergehende Lage aufzusetzen, und erst dann (zum Beispiel in einem Durchgang) die Lötverbindungen mit den Formteilen 2b der darunterliegenden Lage vorzunehmen.

Nun wird in jede beim ersten Durchgang frei gebliebene Nut (das heißt wiederum in jede zweite Nut, jedoch gegenüber dem ersten Durchgang um eine Nut versetzt) ein Formteil des zweiten Typs 2b eingesetzt. Das Formteil 2b ist so orientiert, daß es gegenüber der Darstellung in Fig. 4b in der vom Formteil aufgespannten Ebene um 180 Grad gedreht ist. Das Einsetzen erfolgt wiederum so, daß sich die nun auf der anderen Stirnseite des Ständers liegenden Verbindungsleiter 13b schuppenartig überlappen. Die Überlappungsrichtung ist derjenigen der Überlappung der Formteile des ersten Typs 2a entgegengesetzt (beispielsweise schreitet die Überlappung der Formteile des ersten Typs 2a in Fig. 5 von links nach rechts und diejenige der Formteile des zweiten Typs 2b von rechts nach links fort. Die Zungen 15 der Formteile des zweiten Typs 2b kommen nun mit ihren Verbindungsflächen 5" auf den frei zugänglich gebliebenen Verbindungsflächen 5' der zuvor eingesetzten Formteile des ersten Typs 2a zu liegen. In Fig. 5 ist dies beispielhaft für ein Formteil des zweiten Typs 2b gezeigt. Die aufeinanderliegenden Verbindungsflächen 5', 5" werden wiederum durch die Lötelektroden 7 nach dem oben beschriebenen Lötverfahren miteinander verlötet, wie in Fig. 5 veranschaulicht ist. Wiederum ist es wahlweise möglich, sogleich nach dem Einsetzen eines Formteils 2b die Lötverbindung zu dem zugehörigen Formteil 2a herzustellen, oder zunächst mehrere oder sämtliche Formteile des zweiten Typs 2b für die betrachtete Lage einzusetzen und erst dann die Lötverbindungen mit den Formteilen 2a der betrachteten Lage vorzunehmen. Die Verbindungsflächen 5' auf den Verbindungsleitern 13b der Formteile des zweiten Typs 2b bleiben wiederum zugänglich. Sie bilden die Verbindungsflächen, an denen die Formteile des ersten Typs 2a der nächsten Lage, wiederum wie oben beschrieben, angelötet werden.

Die beiden so miteinander verbundenen Formteile 2a und 2b liegen übrigens deshalb trotz des in den Fig. 4a und 4b gezeigten Höhenversatzes der Zungen 15a, 15b relativ zu den Verbindungsleitern 13a, 13b auf einer Höhe in der Wicklung 1, da die Verbindungsleiter durch die schuppenartige Anordnung eine Schrägstellung aufweisen, welche durch den genannten Höhenversatz gerade ausgeglichen wird. Die beiden miteinander verbundenen Formteile 2a, 2b bilden also eine, in einer Ebenen liegende 360°-Windung einer Spule 12, die mit anderen Spulen 12 überlappt. Durch Aufsetzen und Verlöten weiterer Lagen von Formteilen erfolgt der weitere Aufbau der miteinander überlappender Spulen 12.

Fig. 6 zeigt eine perspektivische Ansicht eines Ausschnitts des Ständers 19 einer elektrischen Maschine 29, bei welcher der Aufbau der beispielhaften Formteilwicklung gemäß Fig. 3-5 mit Hilfe einer Mehrfach-Lötvorrichtung 20 erfolgt. Fig. 6 zeigt einen Bearbeitungszustand, bei dem von der untersten Wicklungslage 3.1 alle Formteile vom ersten Typ 2a sowie drei Formteile vom zweiten Typ 2b in Nuten 21 des Ständers 19 eingesetzt sind (letztere sind zwecks besserer Erkennbarkeit mit schraffierter Oberfläche dargestellt). Anders als die Figuren 1, 4 und 5 zeigt Fig. 6 nicht mehr die Idealisierung einer ebenen Abwicklung, sondern einen gekrümmten Wicklungsaufbau, wie er beispielsweise bei einer Radialfeldmaschine in Innenläuferbauart vorliegt. Damit die eigentliche Wicklung besser sichtbar ist, sind nur die beiden Stirnseiten des Ständers 19 eingezeichnet. Der Ständer 19 ist jedoch im allgemeinen ein Paket aus in Axialrichtung übereinandergeschichteten Blechen; die dargestellten Stirnseiten des Ständers 19 entsprechen also jeweils etwa dem äußersten Blech des Blechpakets.

Mit der schematisch dargestellten Mehrfach-Lötvorrichtung 20 können mehrere Lötverbindungen gleichzeitig hergestellt werden. Die Lötvorrichtung 20 weist hierzu entsprechend mehrere Paare von Widerstandslötelektroden 7 auf, die in einem Abstand zueinander angeordnet sind, der dem Abstand der zu verlötenden Verbindungsstellen 4 entspricht, und deren Anordnung zudem gegebenenfalls der gekrümmten Anordnung der Verbindungsstellen 4 folgt. Bei dem in Fig. 6 gezeigten Beispiel weist die Mehrfach-Lötvorrichtung 20 drei entsprechend angeordnete Paare von Widerstandslötelektroden 7 auf. Entsprechend wird die Mehrfach-Lötvorrichtung 20 mit ihren Lötelektroden 7 simultan an drei Verbindungsstellen 4 auf die Kontaktflächen aufgesetzt; nach dem bei Fig. 1 und 2 geschilderten Verfahren werden somit in einem Arbeitsgang drei Lötverbindungen hergestellt. Bei anderen Ausführungsformen ist die Mehrfach-Lötvorrichung zum gleichzeitigen Verlöten einer größeren Anzahl von Formteilpaaren ausgebildet, beispielsweise zum Verlöten sämtlicher Formteilpaare auf einer Seite des Ständers 19. Die Lötelektroden sind dann beispielsweise ungefähr auf einer Kreislinie angeordnet, und sind in geeigneter Weise (vom Kreismittelpunkt gesehen) nach außen ausfahrbar, so daß die Lötvorrichtung 20 nach Art eines Ringes mit kleinerem Durchmesser als der Ständer 19 in den von den Verbindungsleitern 13 gebildeten Ring eingefahren wird, die Lötelektroden 7 sodann radial nach außen gegen die darauf befindlichen Kontaktflächen gefahren werden, und somit die Simultan-Verlötung erfolgt. Dies erlaubt beispielsweise die Verlötung einer Wicklung mit vier Wicklungslagen in nur acht derartigen Löt-Arbeitsgängen.

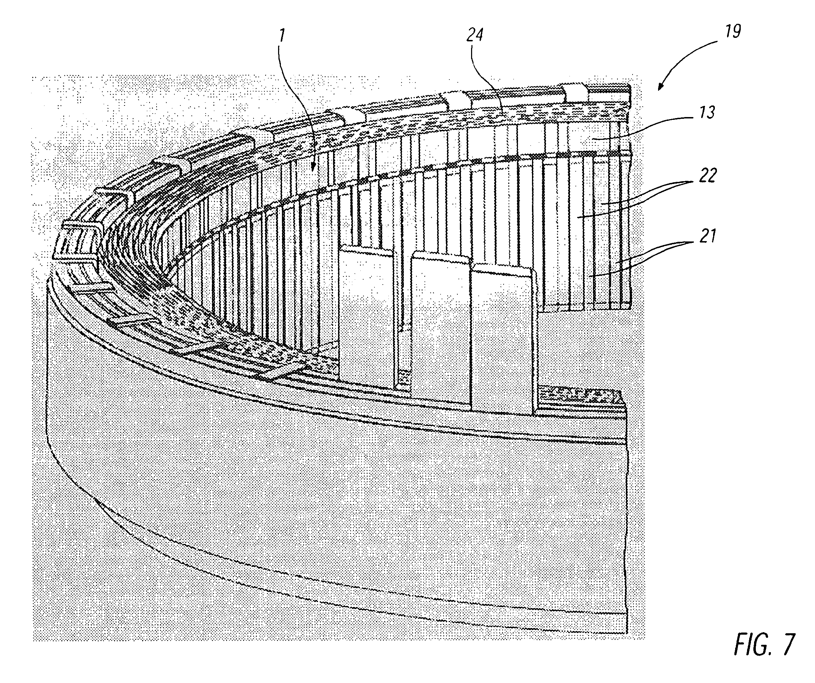

Fig. 7 zeigt ein Ausführungsbeispiel eines Teils eines Ständers 19 mit fertig aufgebauter Wicklung 1. Sichtbar sind Nutköpfe 22, welche zusammen die den Luftspalt der elektrischen Maschine begrenzende Ständerfläche bilden, und hinter denen sich die mit den Formteilen aufgefüllten Nuten 21 radial nach außen erstrecken. Die Verbindungsleiter 13 der miteinander verlöteten Formteile 2 bilden ein auf jeder Stirnseite des Ständers 19 ringförmig umlaufendes Verbindungsleiterpaket 24.

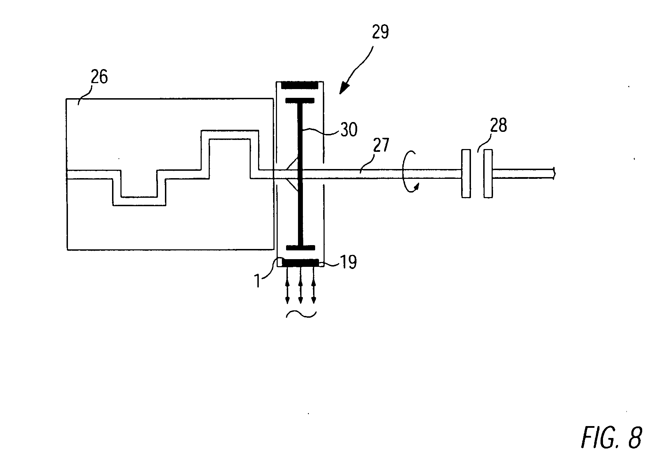

Bei der elektrischen Maschine 29, deren Wicklung mit dem beschriebenen Verfahren hergestellt wird, handelt es sich beispielsweise um einen kombinierten Starter-Generator eines Kraftfahrzeugs mit Verbrennungsmotor. Beispielsweise ist der Starter-Generator ein sogenannter Kurbelwellen-Starter-Generator, dessen Läufer direkt auf der Kurbelwelle oder einer Kurbelwellenverlängerung des Verbrennungsmotors sitzt und zum Beispiel permanent und ohne Zwischenübersetzung mit dieser mitdreht. Fig. 8 veranschaulicht ein Kraftfahrzeug-Antriebssystem mit einem, mit dem vorliegenden Lötverfahren hergestellten Kurbelwellen-Starter-Generator. Und zwar weist es einen Verbrennungsmotor 26 auf, der Drehmoment über eine Antriebswelle 27 (zum Beispiel die Kurbelwelle), eine Kupplung 28 und weitere drehmomentübertragende Teile eines Antriebsstrangs auf die Antriebsräder des Fahrzeugs abgibt. Auf der Antriebswelle 27 sitzt die als Starter und Generator arbeitende elektrische Maschine 29, beispielsweise eine Asynchron-Drehstrommaschine oder eine mit Permanentmagneten ausgerüstete Synchron-Drehstrommaschine. Sie weist einen direkt auf der Antriebswelle 27 sitzenden und drehfest mit ihr verbundenen Läufer 30 sowie den zum Beispiel am Gehäuse des Verbrennungsmotors 26 drehfest abgestützten Ständer 19 gemäß einem der obigen Ausführungsbeispiele auf. Die elektrische Maschine 29 und der Verbrennungsmotor 26 laufen permanent zusammen; das Starten des Verbrennungsmotors 26 erfolgt direkt ohne Übersetzung. Die Wicklung 1 des Ständers 19 wird beispielsweise durch einen Mehrphasen-Wechselrichter (bei einer zum Beispiel dreisträngigen Wicklung handelt es sich um einen Dreiphasenwechselrichter) mit elektrischen Strömen und Spannungen frei einstellbarer Amplitude, Phase und Frequenz gespeist.

Die beschriebenen Ausführungsformen erlauben eine einfache Herstellung von Formteilwicklungen und von mit solchen Wicklungen ausgerüsteten elektrischen Maschinen.

## Patentansprüche

1. Verfahren zur Herstellung einer Wicklung (1) einer elektrischen Maschine (29) aus Wicklungsformteilen (2), die Verbindungsflächen (5) zum Verlöten aufweisen, umfassend:
Auflegen eines oder mehrerer Formteile (2) auf eine bereits aufgebaute Lage (3) von bereits miteinander verlöteten Formteilen (2), derart, daß an einer zu verlötenden Verbindungsstelle (4) eine Verbindungsfläche (5) eines Formteils (2) der bereits aufgebauten Lage (3) und eine Verbindungsfläche (5) des bzw. einer der neu aufgelegten Formteile (2) mit dazwischen befindlichem Lot aufeinander zu liegen kommen, wobei die Oberseite (6) des oberen der zu verbindenden Formteilen (2") im Bereich der Verbindungsstelle (4) freiliegt;
Aufdrücken wenigstens zweier Widerstandslötelektroden (7) auf die freiliegende Oberseite (6) des oberen von zu verbindenden Formteilen (2") im Bereich einer zu verlötenden Verbindungsstelle (4), wodurch das untere der zu verbindenden Formteile (2') gegen die bereits aufgebaute Lage (3) gedrückt wird, und somit die zu verbindenden Formteile (2', 2") an der Verbindungsstelle (4) durch die Widerstandslötelektroden (7) zusammengedrückt werden;
Spannungsbeaufschlagen der Widerstandslötelektroden (7), so daß ein Lötstrom in dem oberen Formteil (2") fließt und die damit einhergehende Widerstandserwärmung eine Verlötung der Formteile (2', 2") an der Verbindungsstelle (4) bewirkt.

2. Verfahren nach Anspruch 1, bei welchem die zu verbindenden Formteile (2) an der Verbindungsstelle (4) alleine durch die Widerstandslötelektroden (7) zusammengedrückt werden.

3. Verfahren nach Anspruch 2, bei welchem die Kraft, mit der die wenigstens zwei Lötelektroden (7) an einer Verbindungsstelle (4) auf die Oberseite (6) des oben liegenden Formteils (2") aufgedrückt werden, zusammen 0,1 kN bis 0,3 kN beträgt.

4. Verfahren nach einem der Ansprüche 1 bis 3, bei welchem Formteile (2) verwendet werden, die mit einer isolierenden Oberfläche ausgerüstet sind, wobei die Oberfläche jedoch an den Verbindungsflächen (5', 5") und an der Oberseite (6) im Bereich der Verbindungsstelle (4) nicht isoliert ist.

5. Verfahren nach Anspruch 4, bei welchem die nicht isolierte Oberfläche im Bereich der Verbindungsstelle (4) in der fertigen Wicklung (1) unisoliert bleibt, und die elektrische Isolierung zum darüberliegenden Formteil (2) allein durch die an dessen unterer Oberfläche vorhandener Isolationsschicht bewirkt wird.

6. Verfahren nach einem der Ansprüche 1 bis 5, bei welchem wenigstens eines der zu verbindenden Formteile (2) an der Verbindungsflächen (5', 5") mit Lot vorbeschichtet ist.

7. Verfahren nach einem der Ansprüche 1 bis 6, bei welchem nach Beendigung der Spannungsbeaufschlagung der Andruck der Lötelektroden (7) noch wenigstens bis zum Erstarren des Lots aufrecht erhalten wird.

8. Verfahren nach einem der Ansprüche 1 bis 7, bei welchem eines der zu verbindenden Formteile (2) im Bereich der Verbindungsstelle (4) flächiger ausgebildet ist, und das andere dort weniger flächig ausgebildet ist, das weniger flächig ausgebildete das an der Verbindungsstelle (4) oben liegende (2") ist, und die Lötelektroden (7) somit auf das weniger flächige drücken.

9. Verfahren nach einem der Ansprüche 1 bis 8, bei welchem die Dicke des oberen Formteils (2") an der Verbindungsstelle (4) wenigstens 0,65 mm beträgt.

10. Verfahren nach einem der Ansprüche 1 bis 9, bei welchem der Lötstrom gemessen wird und hieraus auf die Güte der Lötverbindung geschlossen wird.

11. Verfahren nach einem der Ansprüche 1 bis 10, bei welchem eine Mehrfach-Lötvorrichtung (20) verwendet, mit der simultan mehrere oder alle Verbindungsstellen (4) einer Lage (3) von Formteilen (2) verlötet werden.

12. Verfahren zur Herstellung einer elektrischen Maschine (29) mit einem Ständer (19) und einem Läufer (30), bei
welchem man den Ständer (19) gemäß dem Verfahren nach einem der Ansprüche 1 bis 11 mit einer Formteilwicklung (1) ausrüstet, und
den mit der Wicklung (1) ausgerüsteten Ständer (19) mit dem Läufer (30) zur elektrischen Maschine (29) zusammensetzt.

13. Verfahren nach Anspruch 12, wobei die elektrische Maschine (29) ein Starter-Generator eines Kraftfahrzeugs ist.

## Claims

1. Method for manufacturing a winding (1) of an electric machine (29) using preformed winding parts (2) that comprise joining surfaces (5) for soldering, said method comprising:
placing one or more preformed parts (2) on an already assembled lap (3) of preformed parts (2) already soldered to each other, said placing being carried out in such a manner that a joining surface (5) of a preformed part (2) of the already assembled lap (3) and a joining surface (5) of the newly placed preformed part (2) or one of the newly placed preformed parts (2) get to rest on each other with solder therebetween at a joint (4) to be soldered, wherein the top (6) of the upper preformed part (2") of the preformed parts to be joined lies exposed in the region of the joint (4);
pressing at least two resistance soldering electrodes (7) onto the exposed top (6) of the upper preformed part (2") of the preformed parts to be joined, said pressing being carried out in the region of a joint (4) to be soldered, whereby the lower preformed part (2') of the preformed parts to be joined is pressed against the already assembled lap (3) and the preformed parts (2', 2") to be joined are thus pressed against each other at the joint (4) by the resistance soldering electrodes (7);
applying voltage to the resistance soldering electrodes (7) so that a soldering current flows in the upper preformed part (2") and the resultant resistance heating causes the preformed parts (2', 2") to be soldered to each other at the joint (4).

2. Method according to claim 1, in which the preformed parts (2) to be joined are pressed together at the joint (4) by the resistance soldering electrodes (7) only.

3. Method according to claim 2, in which the force at which the at least two soldering electrodes (7) are pressed onto the top (6) of the upper preformed part (2") at a joint (4) amounts to a total of between 0.1 kN and 0.3 kN.

4. Method according to any one of claims 1 to 3, in which preformed parts (2) are used that are provided with an insulating surface, wherein the surface is not insulated, however, on the joining surfaces (5', 5") and on the top (6) in the region of the joint (4).

5. Method according to claim 4, in which the non-insulated surface remains uninsulated in the region of the joint (4) in the finished winding (1) and electrical insulation against the preformed part (2) lying above is only achieved by the insulating layer provided on the lower surface thereof.

6. Method according to any one of claims 1 to 5, in which at least one of the preformed parts (2) to be joined is precoated on the joining surfaces (5', 5") with solder.

7. Method according to any one of claims 1 to 6, in which the pressure on the soldering electrodes (7) is maintained after the termination of voltage application at least until the solidification of the solder.

8. Method according to any one of claims 1 to 7, in which one of the preformed parts (2) to be joined is more sheet-like in the region of the joint (4) and the other one is less sheet-like there, the less sheet-like one is the upper preformed part (2") at the joint (4), and the soldering electrodes (7) thus press on the less sheet-like one.

9. Method according to any one of claims 1 to 8, in which the thickness of the upper preformed part (2") is at least 0.65 mm at the joint (4).

10. Method according to any one of claims 1 to 9, in which the soldering current is measured and the quality of the soldered joint is concluded from the measuring result.

11. Method according to any one of claims 1 to 10, in which a multiple-soldering device (20) is used that simultaneously solders several or all joints (4) of a lap (3) of preformed parts (2).

12. Method for manufacturing an electric machine (29) having a stator (19) and a rotor (30), in which
the stator (19) is provided with a winding (1) made up of preformed parts according to the method according to any one of claims 1 to 11; and
the stator (19) with the winding (1) is joined to the rotor (30) for forming the electric machine (29).

13. Method according to claim 12, wherein the electric machine (29) is a starter generator of a motor vehicle.

## Revendications

1. Procédé de fabrication d'un enroulement (1) d'une machine électrique (29) en préformés d'enroulements (2) qui présentent des surfaces de connexion (5) pour le brasage, comprenant :
l'application d'un ou de plusieurs préformés (2) sur une couche (3) déjà réalisée de préformés (2) déjà assemblés par brasage de sorte que, au niveau d'un point de connexion (4) à braser, une surface de connexion (5) d'un préformé (2) de la couche (3) déjà réalisée et une surface de connexion (5) du ou de l'un des préformés (2) nouvellement mis en place avec un métal d'apport de brasage situé en position intermédiaire viennent se superposer l'une à l'autre, le côté supérieur (6) du préformé supérieur (2") parmi les préformés à connecter étant libre dans la zone du point de connexion (4) ;
la pression d'au moins deux électrodes de brasage par résistance (7) sur le côté supérieur (6) libre du préformé supérieur (2") parmi les préformés à connecter, dans la zone d'un point de connexion (4) à braser, ce qui fait que le préformé inférieur (2') parmi les préformés à connecter est pressé contre la couche (3) déjà réalisée, et ainsi les préformés (2', 2") à connecter sont assemblés par pression au niveau du point de connexion (4) par les électrodes de brasage par résistance (7) ;
alimentation en tension des électrodes de brasage par résistance (7) de sorte qu'un courant de brasage s'écoule dans le préformé supérieur (2") et l'échauffement par résistance qui l'accompagne provoque un brasage des préformés (2', 2") au niveau du point de connexion (4).

2. Procédé selon la revendication 1, dans lequel les préformés (2) à connecter sont assemblés par pression au niveau du point de connexion (4) uniquement par les électrodes de brasage par résistance (7).

3. Procédé selon la revendication 2, dans lequel la force avec laquelle les au moins deux électrodes de brasage (7) au niveau d'un point de connexion (4) sont pressées sur le côté supérieur (6) du préformé (2") situé en haut est au total comprise entre 0,1 kN et 0,3 kN.

4. Procédé selon une des revendications 1 à 3, dans lequel on utilise des préformés (2) qui sont équipés d'une surface isolante, la surface n'étant cependant pas isolée au niveau des surfaces de connexion (5', 5") et sur le côté supérieur (6) dans la zone du point de connexion (4).

5. Procédé selon la revendication 4, dans lequel la surface non isolée demeure non isolée dans la zone du point de connexion (4) dans l'enroulement (1) fini, et l'isolation électrique vis-à-vis du préformé (2) situé au-dessus n'est provoquée que par la couche isolante présente sur sa surface intérieure.

6. Procédé selon une des revendications 1 à 5, dans lequel au moins un des préformés (2) à connecter est prérevêtu de métal d'apport de brasage au niveau des surfaces de connexion (5' 5").

7. Procédé selon une des revendications 1 à 6, dans lequel, une fois terminée l'alimentation en tension, la pression des électrodes de brasage (7) est maintenue encore au moins jusqu'à la solidification du métal d'apport de brasage.

8. Procédé selon une des revendications 1 à 7, dans lequel un des préformés (2) à connecter est, dans la zone du point de connexion (4), réalisé plus en nappe, et l'autre y est réalisé moins en nappe, le préformé moins en nappe étant celui (2") situé en haut au niveau du point de connexion (4), et les électrodes de brasage (7) pressent ainsi sur le en nappe.

9. Procédé selon une des revendications 1 à 8, dans lequel l'épaisseur du préformé supérieur (2") au niveau du point de connexion (4) représente au moins 0,65 mm.

10. Procédé selon une des revendications 1 à 9, dans lequel le courant de brasage est mesuré et la qualité de l'assemblage brasé est déduite de la mesure.

11. Procédé selon une des revendications 1 à 10, dans lequel un dispositif de brasage multiple (20) est utilisé, avec lequel plusieurs ou tous les points de connexion (4) d'une couche (3) de préformés (2) sont brasés simultanément.

12. Procédé de fabrication d'une machine électrique (29) avec un stator (19) et un rotor (30),
dans lequel on équipe le stator (19) selon le procédé selon une des revendications 1 à 11 avec un enroulement de préformés (1), et
on assemble le stator (19) équipé de l'enroulement (1) avec le rotor (30) pour constituer la machine électrique (29).

13. Procédé selon la revendication 12, dans lequel la machine électrique (29) est un démarreur-générateur d'un véhicule automobile.
